# EUROPÄISCHE PATENTSCHRIFT

(11) **EP 0 718 357 B1**
(45) Veröffentlichungstag und Bekanntmachung des Hinweises auf die Patenterteilung: **19.07.2006**
(21) Anmeldenummer: 95119790.4
(22) Anmeldetag: 15.12.1995
(51) Int. Cl.: C08K 13/08, C08K 3/32, C08K 11/00

(54) **Flammwidrige Kunststoff-Formmasse mit verbesserter Lichtstabilität**
Flame-resistant moulding composition having improved light stability
Masse à mouler ignifugée présentant une stabilité à lumière améliorée

(30) Priorität: 23.12.1994 DE 4446305
(43) Veröffentlichungstag der Anmeldung: 26.06.1996
(73) Patentinhaber: Clariant Produkte (Deutschland) GmbH, 65929 Frankfurt am Main (DE)
(72) Erfinder: Nass, Bernd, D-86152 Augsburg (DE); Wanzke, Wolfgang, Dr., D-86405 Meitingen (DE)

(56) Entgegenhaltungen:
- EP-A- 0 125 652
- JP-A- 3 182 560
- US-A- 5 312 853

## Beschreibung

Die Erfindung bezieht sich auf flammwidrige Kunststoff-Formmassen, die ein Intumeszenz-Flammschutzmittel auf Basis Ammoniumpolyphosphat (APP) enthalten und durch den Zusatz geeigneter Lichtschutzmittel im Vergleich zu mit gebräuchlichen halogenhaltigen Flammschutzmitteln flammwidrig eingestellten Kunststoff-Formmassen, die ebenfalls Lichtschutzmittel enthalten, eine verbesserte Lichtstabilität aufweisen.

Es ist bekannt, Kunststoff-Formmassen mit halogenhaltigen organischen Verbindungen, insbesondere in Kombination mit Antimontrioxid, flammwidrig auszurüsten. Dies wird z.B. in Troitzsch, "Brandverhalten von Kunststoffen", Hanser-Verlag, München (1982), Seiten 48 bis 51 beschrieben. Die Verwendung halogenhaltiger Flammschutzmittel hat den Nachteil, daß durch die Zugabe solcher Verbindungen die Lichtstabilität der damit ausgerüsteten Kunststoff-Formmassen stark vermindert wird (Vogel, "Flammfestmachen von Kunststoffen", Hüthig-Verlag, Heidelberg (1966), Seite 26). Auch durch die Zugabe von Lichtschutzmitteln läßt sich dieser Nachteil nicht ausreichend beheben.

Gleichfalls bekannt ist, Kunststoff-Formmassen mit halogenfreien Intumeszenz-Flammschutzmitteln auf Basis Ammoniumpolyphosphat, wie sie beispielsweise in US-A-4198493, US-A-4461862, EP-A-258685 und EP-A-0584567 beschrieben sind, flammwidrig auszurüsten.

Es wurde nun überraschenderweise gefunden, daß Kunststoff-Formmassen, ausgerüstet mit einem Intumeszenz-Flammschutzmittel auf Basis Ammoniumpoylphosphat in Kombination mit Lichtschutzmitteln sowohl einen ausreichenden Flammschutzeffekt als auch eine gute Lichtstabilität aufweisen.

Dies war nach dem Stand der Technik bisher nicht möglich.

So beschreibt die US-A-5,312,853 zwar eine flammwidrige Polypropylen-Zusammensetzung, welche Ammoniumpolyphosphat als Flammschutzmittel sowie eine Reihe anderer üblicher Zusatzstoffe enthält; die Erreichung einer Zumindest gewissen Lichtstabilität ist dort aber nicht erwähnt.

Ähnlich beschreibt die EP-A-0 125 652 flammwidrige Polyolefin-Zusammensetzungen, die Ammoniumpolyphosphat als Flammschutzmittel sowie bestimmte, ausgewählte Zusatzstoffe enthalten. Auch hier ist die Stabilisierung gegen Licht nicht Gegenstand dieser Erfindung.

Die JP-A-3182560 schließlich offenbart flammgeschützte thermo plastische Zusammensetzungen mit Ammoniumpolyphosphat als Flammschutzmittel, bestimmten Triazinverbindungen und letztlich Silikonverbindungen, welche die Witterungsstabilität günstig beeinflussen sollen. Die genannten Triazinverbindungen wirken aber nicht gegen Lichteinfall.

Gegenstand der Erfindung ist somit eine flammwidrige polymere Formmasse mit verbesserter Lichtstabilität, enthaltend
50 bis 85 Gew.-% eines Polymeren oder einer Polymermischung,
15 bis 50 Gew.-% eines oder mehrerer Flammschutzmittel auf Basis Ammoniumpolyphosphat,
bis zu 2,0 Gew.-% eines oder mehrerer UV-Absorber bzw. Lichtschutzmittel, bezogen auf den Polymeranteil der Gesamtmischung sowie gegebenenfalls
bis zu 80 Gew.-% Füllstoffe und Verstärkungsmittel, und/oder
bis zu 10 Gew.-% weiterer Additive.

Bei den Polymeren kann es sich um nachfolgend aufgeführte Substanzen handeln:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1 , Polymethylpenten-1 , Polyisopren oder Polybutadien sowie Polymerisate von Cycloolefinen, wie beispielsweise von Cyclopenten oder Norbornen.
2. Mischungen der unter 1) genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien-Copolymere, Isobuiylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (ionomere), sowie Terpolymere von Ethylen mit Propylen und einem Dien, wie Hexadien, Dicyclopentadien oder Ethylidennorbornen.
4. Polystyrol, Poly(p-methylstyrol).
5. Copolymere von Styrol oder α-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie Block-Copolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als sogenannte ABS-, MBS-, ASA- oder AES-Polymere bekannt sind.
7. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.
8. Polyphenylenoxyde und -sulfide und deren Mischungen mit Styrolpolymeren.
9. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Prepolymere).
10. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
11. Mischungen der oben erwähnten Polymere bzw. Mischungen von oben nicht erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, POM/thermoplastisches PUR, POM/MBS, PPE/HIPS, PA/HDPE, PA/PP, PA/PPE.

Bevorzugt als Polymere sind Polyolefine, insbesondere Polypropylen, Polyethylen und Ethylen-Vinylacetat-Copolymere.

Außerdem enthält die erfindungsgemäße Kunststoff-Formmasse 15 bis 50, vorzugsweise 20 bis 40 Gew. % eines Flammschutzmittels auf Basis Ammoniumpolyphosphat.

Die erfindungsgemäße Kunststoff-Formmasse enthält zur Erzielung der Lichtstabilität alleine oder in Kombination UV-Absorber bzw. Lichtschutzmittel, wobei die Gesamtzugabemenge UV-Absorber bzw. Lichtschutzmittel bis zu 2,0 Gew.-%, bezogen auf den Polymeranteil der Gesamtmischung, beträgt.

Besonders bevorzugt sind Formmassen, die 0,3 bis 1,5 Gew.-% UV-Absorber bzw. Lichtschutzmittel, bezogen auf den Polymeranteil der Gesamtmischung, enthalten.

Als UV-Absorber bzw. Lichtschutzmittel kommen folgende Verbindungen infrage:
1. 2-(2'-Hydroxyphenyl)-benztriazole, wie beispielsweise 2-(2'-Hydroxy-5'-methylphenyl)-benztriazol, 2-(3',5'-Di-t-butyl-2'-hydroxyphenyl)-benztriazol, 2-(5'-t-Butyl-2'-hydroxyphenyl)-benztriazol, 2-[2'-Hydroxy-5'-(1,1,3,3-tetramethyl-butyl)phenyl]-benztriazol, 2-(3',5'-Di-t-butyl-2'-hydroxyphenyl)-5-chlor-benztriazol, 2-(3' -t-Butyl-2'-hydroxy-5'-methylphenyl)-5-chlor-benztriazol, 2-(3'-sec-Butyl-5'-t-butyl-2'-hydroxyphenyl)-benztriazol, 2-(2'-Hydroxy-4'-octoxyphenyl)-benztriazol, 2-(3',5'-Di-t-amyl-2'-hydroxyphenyl)-benztriazol, 2-(3',5'-Bis-(α,α-dimethylbenzyl)-2'-hydroxyphenyl)-benztriazol, Mischung aus 2-(3'-t-Butyl-2'-hydroxy-5'-(2-octyloxy-carbonylethyl)-phenyl)-5-chlor-benztriazol, 2-(3'-t-Butyl-5'-(2-(2-ethythexyloxy)-carbonylethyl)-2'-hydroxyphenyl)-5-chlor-benztriazol, 2-(3'-t-Butyl-2'-hydroxy-5'-(2-methoxycarbonylethyl)phenyl)-5-chlor-benztriazol, 2-(3'-t-Butyl-2'-hydroxy-5'-(2-methoxycarbonylethyl)phenyl)-benztriazol, 2-(3'-t-Butyl-2'-hydroxy-5'-(2-octyloxy-carbonylethyl)phenyl)-benztriazol, 2-(3'-t-Butyl-5'-[2-(2-ethylhexyloxy)-carbonylethyl]-2'-hydroxyphenyl)-benztriazol, 2-(3'-Dodecyl-2'-hydroxy-5'-methylphenyl)-benztriazol, und 2-(3'-t-Butyl-2'-hydroxy-5'-(2-isooctylocycarbonylethyl)phenyl-benztriazol, 2,2'-Methylen-bis-[4-(1,1,3,3-tetramethylbutyl)-6-benztriazol-2-yl-phenol]; Umesterungsprodukt von 2-[3'-t-Butyl-5'(2-methoxy-carbonylethyl)-2'-hydroxy-phenyl]-benztriazol mit Polyethylenglykol 300.
2. 2-Hydroxybenzophenone, wie beispielsweise das 4-Hydroxy-, 4-Methoxy-, 4-Octoxy, 4-Decyloxy, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie beispielsweise 4-t-Butyl-phenylsalicylat, Phenylsalicylat, Octylphenyl-salicylat, Dibenzoylresorcin, Bis-(4-t-butylbenzoyl)-resorcin, Benzoylresorcin, 3,5-Di-t-butyl-4-hydroxybenzoesäure-2,4-di-t-butylphenylester, 3,5-Di-t-butyl-4-hydroxybenzosäure-hexadecylester, 3,5-Di-t-butyl-4-hydroxybenzoesäureoctadecylester, 3,5-Di-t-butyl-4-hydroxybenzoesäure-2-methyl-4,6-di-t-butylphenylester.
4. Acrylate wie beispielsweise α-Cyan-β,β-diphenylacrylsäure-ethylester oder -isooctylester, α-Carbomethoxy-zimtsäuremethylester, α-Cyano-β-methyl-p-methoxy-zimtsäuremethylester oder -butylester, α-Carbomethoxy-p-methoxyzimtsäure-methylester, N-(β-Carbomethoxy-β-cyanovinyl)-2-methyl-indolin.
5. Nickelverbindungen wie beispielsweise Nickelkomplexe des 2,2'-Thio-bis-[4-(1,1,3,3 tetramethylbutyl)-phenols] wie der 1:1 oder der 1:2 Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-t-butyl-benzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie beispielsweise Bis-(2,2,6,6-tetramethylpiperidyl)-sebacat, Bis-(2,2,6,6-tetramethyl-piperidyl)-glutarat, Bis-(2,2,6,6-tetramethyl-piperidyl)-succinat, Bis-(1,2,2,6,6-pentamethylpiperidyl)-sebacat, Bis-(1,2,2,6,6-pentamethylpiperidyl)-glutarat, Bis-(1,2,2,6,6-pentamethylpiperidyl)-sebacat, n-Butyl-3,5-di-t-butyl-4-hydroxybenzylmalonsäure-bis(1,2,2,6,6-pentamethylpiperidyl)-ester, 2,2,6,6-Tetramethylpiperidylbehenat, 1,2,2,6,6-Pentamethylpiperidylbehenat, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-tetramethyl-4-piperidyl)-hexamethylendiamin und 4-t-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, 4-Stearoyloxy-2,2,6,6-tetramethylpiperidin, 4-Stearyloxy-1,2,2,6,6-pentamethylpiperidin, 4-Stearoyloxy-1,2,2,6,6-pentamethylpiperidin, Bis-(1,2,2,6,6-pentamethylpiperidyl)-2-n-butyl-2-(2-hydroxy-3,5-di-t-butylbenzyl)-malonat, Bis-(1,2,2,6,6-pentamethylpiperidyl)-2-n-butyl-2-(4-hydroxy-3,5-di-t-butylbenzyl)-malonat, 3-n-Octyl-7,7,9,9-tetramethyl-1,3,8-triazaspiro [4,5] decan-2,4-dion, Bis-(1-octyloxy-2,2,6,6-tetramethyl-piperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylen-diamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-methoxypropylamino-2,2,6,6-tetramethylpiperidyl)-1,3,5-triazin und 1,2-Bis-(3-aminopropylamino)äthan, Kondensationsprodukt aus 2-Chlor-4,6-di-(4-methoxypropylamino-1,2,2,6,6-pentamethylpiperidyl)-1,3,5-triazin und 1,2-Bis-(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-ethan, Umsetzungsprodukte von 2-Chlor-4,6-di-(4-n-butylamino-2,2,6,6-tetramethylpiperidyl)-1 ,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-amino-propylamino)äthan, Umsetzungsprodukte von 2-Chlor-4,6-di-(4-n-butylamino-1,2,2,6,6-pentamethylpiperidyl)-1,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)äthan, Umsetzungsprodukte von 2-Chlor-4,6-di-(4-n-butyl-amino-2,2,6,6-tetramethylpiperidyl)-1,3,5-triazin und 4-t-Octylamino-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropyl-aminolethan, Umsetzungsprodukte von 2-Chlor-4,6-di-(4-n-butylamino-1,2,2,6,6-pentamethylpiperidyl)-1,3,5-triazin und 4-t-Octylamino-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)ethan, Umsetzungsprodukte von 2-Chlor-4,6-di-(4-n-butylamino-2,2,6,6-tetramethylpiperidyl)-1,3,5-triazin und 4-(4-n-Butylamino-2,2,6,6-tetramethylpiperidyl)-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)ethan, Umsetzungsprodukte von 2-Chlor-4,6-di-(4-n-butylamino-1,2,2,6,6-pentamethylpiperidyl)-1,3,5-triazin und 4-(4-n-Butylamino-2,2,6,6-tetramethylpiperidyl)-2,6-dichlor-1,3,5-s-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)ethan, 3-Dodecyl-7,7,9,9-tetramethyl-1,3,8-triazaspiro-[4,5]-decan-2,4-dion, Oligomerisiertes 2,2,4,4-Tetramethyl-20-(oxiranylmethyl)-7-oxa-3,20-diazadispiro-[5.1.11.2]-heneicosan-21-on, Oligomerisiertes 1,2,2,4,4-Pentamethyl-20-(oxiranylmethyl)-7-oxa-3,20-diaza-dispiro-[5.1.11.2]-heneicosan-21-on, Oligomerisiertes 1-Acetyl-2,2,4,4-tetramethyl-20-(oxiranylmethyl)-7-oxa-3,20-diaza-dispiro-[5.1.11.2]-heneicosan-21-on, Dodecyl-1-(2,2,4,4-tetramethyl-4-piperidyl)pyrrolidin-2,5-dion, 3-Dodecyl-1-(1,2,2,6,6-pentamethyl-4-piperidyl)-pyrrolidin-2,5-dion, 2,2,4,4-Tetramethyl-7-oxa-3,20-diaza-dispiro-[5.1.11.2]-heneicosan-21-on, 2,2,4,4-Tetramethyl-7-oxa-21-oxo-3,20-diaza-dispiro-[5.1.11.2]-heneicosan-3-propansäure-dodecylester, 2,2,4,4-Tetramethyl-7-oxa-21-oxo-3,20-diaza-dispiro-[5.1.11.2]-heneicosan-3-propansäure-tetradecylester, 2,2,3,4,4-Pentamethyl-7-oxa-3,20-diaza-dispiro-[5.1.11.2]-heneicosan-21-on, 2,2,3,4,4-Pentamethyl-7-oxa-21-oxo-3,20-diaza-dispiro-[5.1.11.2]-heneicosan-3-propansäure-dodecylester, 2,2,3,4,4-Pentamethyl-7-oxa-21-oxo-3,20-diazadispiro-[5.1.11.2]-heneicosan-3-propansäure-tetradecylester, 3-Acetyl-2,2,4,4-tetramethyl-7-oxa-3,20-diaza-dispiro-[5.1.11.2]-heneicosan-21-on, 3-Acetyl-2,2,4,4-tetramethyl-7-oxa-21-oxo-3,20-diaza-dispiro-[5.1.11.2]-heneicosan-3-propansäure-dodecylester, 3-Acetyl-2,2,4,4-tetramethyl-7-oxa-21-oxo-3,20-diaza-dispiro-[5.1.11.2]-heneicosan-3-propansäure-tetradecylester, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)-biphenyl, Poly-N,N'-bis-(2,2,6,6-tetramethyl-4-piperidyl)-1,8-diazadecyclen, Additionsverbindung von 2,2,6,6-Tetramethyl-4-allyloxy-piperidin und Polymethylhydrogensiloxan (Molmasse bis 4000), Additionsverbindung von 1,2,2,6,6-Pentamethyl-4-allyloxy-piperidin und Polyrnethylhydrogensiloxan (Molmasse bis 4000), N,N'-Diformyl-N,N'-bis-(2,2,6,6-tetramethyl-4-piperidinyl)-hexamethylendiamin, N,N'-Diformyl-N,N'-bis-(1,2,2,6,6-pentamethyl-4-piperidinyl)-hexamethylendiamin, 5,11-Bis-(2,2,6,6-tetramethyl-4-piperidinyl)-3,5,7,9,11,13-hexaaza-tetracyclo-[7.4.0.0^{2,7}.1^{3,13}]-tetradecan-8,14-dion, 5,11-Bis-(1,2,2,6,6-pentamethyl-4-piperidinyl)-3,5,7,9,11,13-hexaaza-tetracyclo-[7.4.0.0^{2,7}.1^{3,13}]-tetradecan-8,14-dion, 7,7,9,9-Tetramethyl-8-acetyl-3-dodecyl-1,3,8-triaza-spiro-[4.5]-decan-2,4-dion, [(4-Methoxyphenyl)-methylen]-propandisäure-bis-(2,2,6,6-tetramethyl-4-piperidinyl)-ester, [(4-Methoxyphenyl)-methylen]-propandisäure-bis-(1,2,2,6,6-pentamethyl-4-piperidinyl)-ester, 2,4,6-Tris-(N-cyclohexyl-N-[2-(3,3,4,5,5-pentamethyl-piperazinon-1-yl)-ethyl]-amino)-1,3,5-triazin, Copolymerisat aus Styrol mit α-Methylstyrol und Maleinsäureanhydrid umgesetzt mit 4-Amino-2,2,6,6-tetramethylpiperidin und Octadecylamin, Copolymerisat aus Styrol mit α-Methylstyrol und Maleinsäureanhydrid umgesetzt mit 4-Amino-1,2,2,6,6-pentamethylpiperidin und Octadecylamin, Polycarbonat mit 2,2'-[(2,2,6,6-Tetramethyl-4-piperidinyl)-imino]-bis-[ethanol] als Diolkomponente, Polycarbonat aus 2,2'-[(1,2,2,6,6-Pentamethyl-4-piperidinyl)-imino]-bis-[ethanol] als Diolkomponente, Copolymer aus Maleinsäureanhydrid und einem α-Olefin bis C₃₀ umgesetzt mit 4-Amino-2,2,6,6-tetramethylpiperidin, Copolymer aus Maleinsäureanhydrid und einem α-Olefin bis C₃₀ umgesetzt mit 1-Acetyl-4-amino-2,2,6,6-tetramethylpiperidin, Copolymer aus Maleinsäureanhydrid und einem α-Olefin bis C₃₀ umgesetzt mit 4-Amino-1,2,2,6,6-pentamethylpiperidin, sowie die N-Alkyl- und N-Aryloxyderivate der oben genannten Verbindungen mit freien NH-Gruppen am Piperidin, speziell α-Methylbenzyloxy- und Alkyloxy- von C₁ bis C₁₈.
7. Oxalsäurediamide, wie beispielsweise 4,4'-Di-octyloxy-oxanilid, 2,2'-Di-octyloxy-5,5'-di-t-butyl-oxanilid, 2,2'-Di-dodecyloxy-5,5'-di-t-butyl-oxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4'-di-t-butyl-oxanilid, Gemische von o- und p-Methoxy- sowie von o- und p-Ethoxy-disubstituierten Oxaniliden.
8. 2-(2-Hydroxyphenyl)-1,3,5-triazine, wie beispielsweise 2,4,6-Tris-(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis-(2,4-dimethylphenyl)-1,3,5-triazin, 2-(2,4-Dihydroxyphenyl)-4,6-bis-(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-di-methylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxypropyloxy)phenyl]-4,6-bis(2,4-dimethylphenyl)-1,3,5-triazin.

Bevorzugt eingesetzt werden Lichtschutzmittel bzw. UV-Absorber aus der Klasse der sterisch gehinderten Amine und der 2-Hydroxybenzophenone.

Die erfindungsgemäßen Kunststoff-Formmassen können auch zusätzlich bis zu 80 Gew.-% an Füllstoffen und Verstärkungsmitteln enthalten, wie beispielsweise Calciumcarbonat, Füllstoffe und Verstärkungsmittel, wie beispielsweise Calciumcarbonat, Silikate, Glasfasern, Asbest, Talk, Kaolin, Glimmer, Bariumsulfat, Metalloxide und -hydroxide, Ruß, Graphit.

Bevorzugt sind dabei Formmassen, die zusätzlich 10 bis 50 Gew.-% an Füllstoffen und Verstärkungsmitteln enthalten.

Daneben können die erfindungsgemäßen Kunststoff-Formmassen auch zusätzlich bis zu 10 Gew.-% folgender Additive enthalten:
1. Antioxidantien
   1.1 Alkylierte Monophenole, beispielsweise 2,6 Di-t-butyl-4-methylphenol, 2-Butyl-4,6-dimethylphenol, 2,6-Di-t-butyl-4-ethylphenol, 2,6-Di-t-butyl-4-n-butylphenol, 2,6-Di-t-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol, 2,6-Di-nonyl-4-methylphenol, 2,4-Dimethyl-6(1'-methylundec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen dieser Verbindungen.
   1.2 Alkylthiomethylphenole, beispielsweise 2,4-Di-octylthiomethyl-6-t-butylphenol, 2,4-Dioctylthiomethyl-6-methylphenol, 2,4-Di-octylthiomethyl-6-ethylphenol, 2,6-Di-dodecylthlomethyl-4-nonylphenol.
   1.3 Hydrochinone und alkylierte Hydrochinone, beispielsweise 2,6-Di-t-butyl-4-methoxyphenol, 2,5-Di-t-butyl-hydrochinon, 2,5-Di-t-amyl-hydrochinon, 2,6-Diphenyl-4-octadecyloxyphenol, 2,6-Di-t-butyl-hydrochinon, 2,5-Di-t-butyl-4-hydroxyanisol, 3,5-Di-t-butyl-4-hydroxyanisol, 3,5-Di-t-butyl-4-hydroxyphenolstearat, Bis-(3,5-di-t-butyl-4-hydroxyphenyl)adipat.
   1.4 Hydroxylierte Thiodiphenylether, beispielsweise 2,2'-Thio-bis-(6-t-butyl-4-methylphenol), 2,2'-Thio-bis-(4-octylphenol), 4,4'-Thio-bis-(6-t-butyl-3-methylphenol), 4,4'-Thio-bis-(6-t-butyl-2-methyl-phenol), 4,4'-Thio-bis-(3,6-disec.-amylphenol), 4,4'-Bis-(2,6-dimethyl-4-hydroxyphenyl)-disulfid.
   1.5 Alkyliden-Bisphenole, beispielsweise 2,2'-Methylen-bis-(6-t-butyl-4-methylphenol), 2,2'-Methylen-bis-(6-t-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylenbis-(6-nonyl-4-methylphenol), 2,2'-Methylen-bis-(4,6-di-t-butylphenol), 2,2'-Ethyliden-bis-(4,6-di-t-butylphenol), 2,2'-Ethyliden-bis-(6-t-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-t-butylphenol), 4,4'-Methylen-bis-(6-t-butyl-2-methylphenol), 1,1-Bis-(5-t-butyl-4-hydroxy-2-methylphenyl)-butan, 2,6-Bis-(3-t-butyl-5-methyl-2-hydroxybenzyl)-4-methylphenol, 1,1,3-Tris-(5-t-butyl-4-hydroxy-2-methyl-phenyl)-butan, 1,1-Bis-(5-t-butyl-4-hydroxy-2-methylphenyl)-3-n-dodecylmercaptobutan, Bis-(3-t-butyl-4-hydroxy-5-methyl-phenyl)-dicyclopentadien, Bis-[2-(3'-t-butyl-2'-hydroxy-5'-methyl-benzyl)-6-t-butyl-4-methyl-phenyl]-terephthalat, 1,1-Bis-(3,5-dimethyl-2-hydroxyphenyl)-butan, 2,2-Bis-(3,5-di-t-butyl-4-hydroxyphenyl)-propan, 2,2-Bis-(5-t-butyl-4-hydroxy-2-methylphenyl)-4-n-dodecylmercaptobutan, 1,1,5,5-Tetra-(5-t-butyl-4-hydroxy-2-methylphenyl)-pentan.
   1.6 O-, N- und S-Benzylverbindungen, beispielsweise 3,5,3',5'-Tetra-t-butyl-4,4'-dihydroxydibenzylether, Octadecyl-4-hydroxy-3,5-dimethylbenzylmercaptoacetat, Tris-(3,5-di-t-butyl-4-hydroxybenzyl)-amin, Bis-(4-t-butyl-3-hydroxy-2,6-dimethylbenzyl)-di-thioterephthalat, Bis-(3,5-di-1-bulyl-4-hydroxybenzyl)-sulfid, Isooctyl-3,5-di-t-butyl-4-hydroxybenzyl-mercaptoacetat.
   1.7 Hydroxybenzylierte Malonate, beispielsweise Dioctadecyl-2,2-bis-(3,5-di-t-butyl-2-hydroxybenzyl)-malonat, Di-octadecyl-2-(3-t-butyl-4-hydroxy-5-methylbenzyl)-malonat, Didodecylmercaptoethyl-2,2-bis-(3,5-di-t-butyl-4-hydroxybenzyl)-malonat.
   1.8 Hydroxybenzyl-Aromaten, beispielsweise 1,3,5-Tris-(3,5-di-t-butyl-4-hydroxybenzyl)-2,4,6-trimethylbenzol, 1,4-Bis-(3,5-di-t-butyl-4-hydroxybenzyl)-2,3,5,6-tetramethylbenzol, 2,4,6-Tris-(3,5-di-t-butyl-4-hydroxybenzyl)-phenol.
   1.9 Triazinverbindungen, beispielsweise 2,4-Bis-octylmercapto-6-(3,5-di-t-butyl-4-hydroxyanilino)-1,3,5-triazin, 2-Octylmercapto-4,6-bis-(3,5-di-t-butyl-4-hydroxyanilino)-1,3,5-triazin, 2-Octylmercapto-4,6-bis-(3,5-di-t-butyl-4-hydroxyphenoxy)-1,3,5-triazin, 2,4,6-Tris-(3,5-di-t-butyl-4-hydroxyphenoxy)-1,2,3-triazin, 1,3,5-Tris-(3,5-t-butyl-4-hydroxybenzyl)-isocyanurat, 1,3,5-Tris-(4-t-butyl-3-hydroxy-2,6-dimethylbenzyl)-isocyanurat, 2,4,6-Tris-(3,5-di-t-butyl-4-hydroxyphenylethyl)-1,3,5-triazin, 1,3,5-Tris-(3,5-di-t-butyl-4-hydroxyphenylpropionyl)-hexahydro-1,3,5-triazin, 1,3,5-Tris-(3,5-dicyclohexyl-4-hydroxybenzyl)-isocyanurat.
   1.10 Benzylphosphonate, beispielsweise Dimethyl-2,5-di-t-butyl-4-hydroxybenzylphosphonat, Diethyl-3,5-di-t-butyl-4-hydroxybenzylphosphonat, Dioctadecyl-3,5-di-t-butyl-4-hydroxybenzylphosphonat, Dioctadecyl-5-t-butyl-4-hydroxy-3-methylbenzylphosphonat, Ca-Salz des 3,5-di-t-butyl-4-hydroxybenzylphosphonsäure-monoethylesters.
   1.11 Acylaminophenole, beispielsweise 4-Hydroxy-laurinsäureanilid, 4-Hydroxystearinsäureanilid, N-(3,5-Di-t-butyl-4-hydroxyphenyl)-carbaminsäureoctylester.
   1.12 Ester der β-(3,5-Di-t-butyl-4-hydroxyphenyl)-propionsäure mit ein- oder mehrwertigen Alkoholen, wie mit Methanol, Ethanol, Octadecanol, 1,6-Hexandiol, 1,9-Nonandiol, Ethylenglykol, 1,2-Propandiol, Neopentylglykol, Thiodiethylenglykol, Diethylenglykol, Triethylenglykol, Pentaerythrit, Tris-(hydroxyethyl)-isocyanurat, N,N'-Bis-(hydroxyethyl)-oxalsäurediamid, 3-Thia-undecanol, 3-Thia-pentadecanol, Trimethylhexandiol, Trimethylolpropan, 4-Hydroxymethyl-1-phospha-2,6,7-trioxabicyclo-[2,2,2]-octan.
   1.13 Ester der β-(5-t-Butyl-4-hydroxy-3-methylphenyl)-propionsäure mit ein- oder mehrwertigen Alkoholen, wie beispielsweise mit Methanol, Ethanol, Octadecanol, 1,6-Hexandiol, 1,9-Nonandiol, Ethylenglykol, 1,2-Propandiol, Neopentylglykol, Thiodietyhlenglykol, Diethylenglykol, Triethylenglykol, Pentaerythrit, Tris-(hydroxy)-ethyl-isocyanurat, N,N'-Bis-(hydroxyethyl)-oxalsäurediamid, 3-Thia-undecanol, 3-Thia-pentadecanol, Trimethylhexandiol, Trimethylolpropan, 4-Hydroxymethyl-1-phospha-2,6,7-trioxabicyclo-[2,2,2]-octan.
   1.14 Ester der β-(3,5-Dicyclohexyl-4-hydroxyphenyl)-propionsäure mit ein- oder mehrwertigen Alkoholen, wie beispielsweise Methanol, Ethanol, Octadecanol, 1 ,6-Hexandiol, 1 ,9-Nonandiol, Ethylenglykol, 1,2-Propandiol, Neopentylglykol, Thiodiethylenglykol, Diethylenglykol, Triethylenglykol, Pentaerythrit, Tris-(hydroxy)ethyl-isocyanurat, N,N'-Bis-(hydroxyethyl)-oxalsäurediamid, 3-Thia-undecanol, 3-Thia-pentadecanol, Trimethylhexandiol, Trimethylolpropan, 4-Hydroxymethyl-1-phospha-2,6,7-trioxabicyclo-(2,2,2)-octan.
   1.15 Ester der 3,5-Di-t-butyl-4-hydroxyphenylessigsäure mit ein- oder mehrwertigen Alkoholen, wie beispielsweise mit Methanol, Ethanol, Octadecanol, 1,6-Hexandiol, 1,9-Nonandiol, Ethylenglykol, 1,2-Propandiol, Neopentylglykol, Thiodiethylenglykol, Diethylenglykol, Triethylenglykol, Pentaerythrit, Tris-(hydroxy)ethyl-isocyanurat, N,N'-Bis-(hydroxyethyl)-oxalsäurediamid, 3-Thia-undecanol, 3-Thia-pentadecanol, Trimethylhexandiol, Trimethylolpropan, 4-Hydroxymethyl-1-phospha-2,6,7-trioxabicyclo-[2,2,2]-octan.
   1.16 Ester der 3,3-Bis-(3'-t-butyl-4'-hydroxyphenyl)-buttersäure mit ein- oder mehrwertigen Alkoholen, wie beispielsweise mit Methanol, Ethanol, Octadecanol, 1,6-Hexandiol, 1,9-Nonandiol, Ethylenglykol, 1,2-Propandiol, Neopentylglykol, Thiodietyhlenglykol, Diethylenglykol, Triethylenglykol, Pentaerythrit, Tris-(hydroxy)-ethyl-isocyanurat, N,N'-Bis-(hydroxyethyl)-oxalsäurediamid, 3-Thia-undecanol, 3-Thia-pentadecanol, Trimethylhexandiol, Trimethylolpropan, 4-Hydroxymethyl-1-phospha-2,6,7-trioxabicyclo-[2,2,2]-octan.
   1.17 Amide der β-(3,5-Di-t-butyl-4-hydroxyphenyl)-propionsäure, wie beispielsweise N,N'-Bis-(3,5-di-t-butyl-4-hydroxyphenylpropionyl)-hexamethylendiamin, N,N'-Bis-(3,5-di-t-butyl-4-hydroxyphenylpropionyl)-trimethylendiamin, N,N'-Bis-(3,5-di-t-butyl-4-hydroxyphenylpropionyl)-hydrazin.
2. Metalldesaktivatoren, wie beispielsweise N,N'-Diphenyloxalsäurediamid, N-Salicylal-N'-salicyloylhydrazin, N,N'-Bis-(salicyloyl)-hydrazin, N,N'-Bis-(3,5-di-t-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-bis-salicyloyl-oxalsäure-dihydrazid, N,N'-Bis-salicyloyl-thiopropionsäure-dihydrazid.
3. Phosphite und Phosphonite, wie beispielsweise Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-t-butylphenyl)-phosphit, Diisodecylpentaerythrit-diphosphit, Bis-(2,4-di-t-butylphenyl)-pentaerythritdiphosphit, Bis-(2,6,-di-t-butyl-4-methylphenyl)-pentaerythritdiphosphit, Bis-isodecyloxy-pentaerythritdiphosphit, Bis-(2,4-di-t-butyl-6-methylphenyl)-pentaerythritdiphosphit, Bis-(2,4,6-tri-t-butylphenyl)-pentaerytritdiphosphit, Tristearyl-sorbit-triphosphit, Tetrakis-(2,4-di-t-butylphenyl)-4,4'-biphenylen-diphosphonit, 6-Isooctyloxy-2,4,8,10-tetra-t-butyl-12H-dibenz[d,g]-1,3,2-dioxaphosphocin, 6-Fluor-2,4,8,10-tetra-t-butyl-12-methyl-dibenz-[d,g]-1,3,2-dioxaphophocin, Bis-(2,4-di-t-butyl-6-methylphenyl)-methylphosphit, Bis-(2,4-di-t-butyl-6-methylphenyl)-ethylphosphit, Tris(2-t-butyl-4-thio-(2'-methenyl-4'-hydroxy-5'-t-butyl)-phenyl-5-methenyl)-phenylphosphit.
4. Peroxidzerstörende Verbindungen wie beispielsweise Ester der β-Thiodipropionsäure, beispielsweise der Lauryl-, Stearyl-, Myristyl- oder Tridecylester, Mecaptobenzimidazol, das Zinksalz des 2-Mercaptobenzimidazols, Zink-alkyldithiocarbamate, Zinkdibutyl-dithiocarbamat, Dioctadecylmonosulfid, Dioctadecyldisulfid, Pentaerytrit-tetrakis-(β-dodecylmercapto)-propionat.
5. Polyamidstabilisatoren, wie beispielsweise Kupfersalze in Kombination mit Jodiden und/oder Phosphorverbindungen und Salze des zweiwertigen Mangans.
6. Basische Co-Stabilisatoren wie beispielsweise Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
7. Nukleierungsmittel, wie beispielsweise 4-t-Butylbenzoesäure, Adipinsäure, Diphenylessigsäure, Dibenzylidensorbitol.
8. Sonstige Zusätze, wie beispielsweise Weichmacher, Gleitmittel, Emulgatoren, Pigmente, Optische Aufheller, Antistatika, Treibmittel.

Die Additive werden nach allgemein üblichen Methoden in die organischen Polymeren eingearbeitet. Die Einarbeitung kann beispielsweise durch Einmischen oder Aufbringen der Verbindungen und gegebenenfalls weiterer Additive in oder auf das Polymere unmittelbar nach der Polymerisation oder in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die Verbindungen sind auch wirksam, wenn sie in ein bereits granuliertes Polymer nachträglich in einem gesonderten Verarbeitungsschritt eingebracht werden.

Die verschiedenen zusätzlichen Additive der vorgenannten Gruppen 1 bis 8 werden den zu stabilisierenden Polymeren in einer Menge von bis zu 10, vorzugsweise 0,01 bis 5 Gew.-%, bezogen auf das Gesamtgewicht der Formmasse, zugesetzt.

Die erfindungsgemäß zu verwendenden Verbindungen können auch in Form eines Masterbatches, der diese Verbindungen beispielsweise in einer Konzentration von bis zu 75 Gew.-% enthält, den zu stabilisierenden Polymeren zugesetzt werden.

Die erfindungsgemäße Kunststoff-Formmasse kann in verschiedener Form angewendet werden, bevorzugterweise im Spritzguß- und dickwandigen Extrusionsanwendungen.

Die nachfolgenden Beispiele und Tabelle sollen die Erfindung näher erläutern.

Für die Herstellung der flammwidrigen und gegebenenfalls UV-stabilisierten Kunststoff-Formmassen wurde ein Polypropylen-Homopolymer mit einem Schmelzindex MFI 230/5 von 55 g/10 min (Hostalen PPU 0180, Hoechst AG) eingesetzt. Als Flammschutzmittel wurden folgende im Handel befindliche Produkte verwendet: als halogenfreies Flammschutzmittel auf Basis von Ammoniumpolyphosphat Hostaflam TP AP 750 (Hoechst AG); als bromhaltiges Flammschutzmittel in Kombination mit Antimontrioxid Tetrabrombisphenol A-bis(2,3-dibrompropylether), im folgenden OBPE (Oktabromphenolether) genannt (z.B. zu beziehen von Riedel de Haen); als chlorhaltiges Flammschutzmittel in Kombination mit Antimontrioxid 1,2,3,4,7,8,9,10,13,13,14,14-Dodecachlor-1,4,4a,5,6,6a,7,10,10a,11,12,12a -dodecahydro-1,4: 7,10-dimethanodibenzo(a,e)cycloocten (zu beziehen unter dem Namen Dechlorane Plus 25 von Occidental Chemical Corporation). Zusätzlich wurden weitere Rezepturbestandteile wie Antioxidantien, Säureakzeptoren etc. eingesetzt.

Die Verarbeitung erfolgte durch Mischen der Komponenten in einem Fluidmischer und Extrusion der Mischung in einem Zweischneckenextruder (30 mm Schneckendurchmesser, 63 cm Länge, Temperatureinstellung (vom Einzug zur Düse) 170°C/180°C/190°C/200°C/210°C; resultierende Massetemperatur - bestimmt in der Düse - ca. 220°C). Die Granulierung erfolgte über ein Wasserbad unter Verwendung eines Granulators. Das auf diese Weise erhaltene Granulat wurde anschließend auf einer Spritzgußmaschine bei 220 bis 250°C zu Prüfkörpern von 1 mm Dicke, 60 mm Breite und 60 mm Länge (zur Prüfung der Bewitterungsstabilität), bzw. zu Prüfkörpern von 127 mm Länge, 12,7 mm Breite und 1,6 mm Dicke (zur Bestimmung des Brandverhaltens) geformt.

Die Prüfung der Bewitterungsstabilität erfolgte an den 1 mm starken Prüfkörpern in einem Suntest-Gerät der Firma Heraeus mit Suprax-Filter bei einer Schwarztafeltemperatur von 55°C + 5°C ohne Beregnung.
Bewertungskriterium war die Belichtungszeit bis zum Auftreten einer starken Oberflächenversprödung, die unter einem Lichtmikroskop bei 100-facher Vergrößerung bewertet wurde. Zusätzlich wurde die Verfärbung der Prüfkörper beurteilt.

Das Brandverhalten der Prüfkörper wurde nach der Vorschrift von UNDERWRITERS LABORATORIES: "Test for Flammability of Plastic Material - UL 94" (Fassung vom 2. Mai 1975) ermittelt. Die Angabe "n.k." in der Tabelle bedeutet "nicht klassifizierbar nach UL 94". Die Angaben "V-0" und "V-2" in der Tabelle sind in den Prüfkriterien erläutert:

| | |
|---|---|
| Probekörper | zwei Sätze von je fünf Proben 127 mm x 12,7 mm x maximal 12,7 mm. Es sind je zwei Probensätze sowohl in der minimalen als auch in der maximalen Materialdicke des vorgesehenen Anwendungsfalles zu prüfen. Je nach Versuchsausgang kann zusätzlich die Prüfung von weiteren Probensätzen erforderlich werden. |
| Probenvorbehandlung | a) Lagerung eines Probensatzes mindestens 48 h im Normklima 23/50 |
| | b) Lagerung eines zweiten Probensatzes 168 h lang im Warmluftofen bei 70°C, anschließend 4 h Abkühlung auf Raumtemperatur im Exsikkator |
| Probenanordnung | Probe mit Längsachse vertikal aufgehängt, 305 mm unterhalb der Probenunterkante befindet sich eine horizontale Lage Watte mit den Abmessungen 51 mm x 51 mm x 6 mm |
| Zundquelle | Bunsen- oder Tirrillbrenner mit 19 mm hoher, nichtleuchtender Flamme |
| Beflammungsdauer | je Probe zweimal 10 s, die zweite Beflammung beginnt, sobald die durch die erste Beflammung entzündete Probe verloschen ist. |
| Ergebnisse | a) Einstufung in die Klasse 94V-0, wenn folgende Kriterien erfüllt sind: |
| | kein Nachbrennen länger als 10 s nach Beflammungsende, |
| | Summe der Nachbrennzeiten bei 10 Beflammungen nicht größer als 50 s. |
| | kein brennendes Abtropfen, |
| | kein vollständiges Abbrennen der Proben, |
| | kein Nachglühen der Proben länger als 30 s nach Beflammungsende. |
| | b) Einstufung in Klasse 94V-1, wenn folgende Kriterien erfüllt sind: kein Nachbrennen länger als 30 s nach Beflammungsende, |
| | Summe der Nachbrennzeiten bei 10 Beflammungen nicht größer als 250 s, |
| | kein Nachglühen der Proben länger als 60 s nach Beflammungsende, übrige Kriterien wie bei a). |
| | c) Einstufung in Klasse 94V-2, wenn folgende Kriterien erfüllt sind: Zündung der Watte durch brennendes Abtropfen, |
| | übrige Kriterien wie bei b). |

Die Versuche zeigen, daß es möglich ist, bei der Verwendung eines halogenfreien Flammschutzmittels auf Basis Ammoniumpolyphosphat durch Zugabe geeigneter Lichtschutzmittel eine verbesserte Lichtstabilität im Vergleich zur Verwendung von halogenhaltigen Flammschutzmitteln zu erzielen, wobei gleichzeitig eine gute Flammschutzwirkung erzielbar ist. Im Vergleich zu halogenhaltigen - insbesondere bromhaltigen - Flammschutzmitteln ist außerdem die Verfärbungsneigung bei Belichtung geringer.

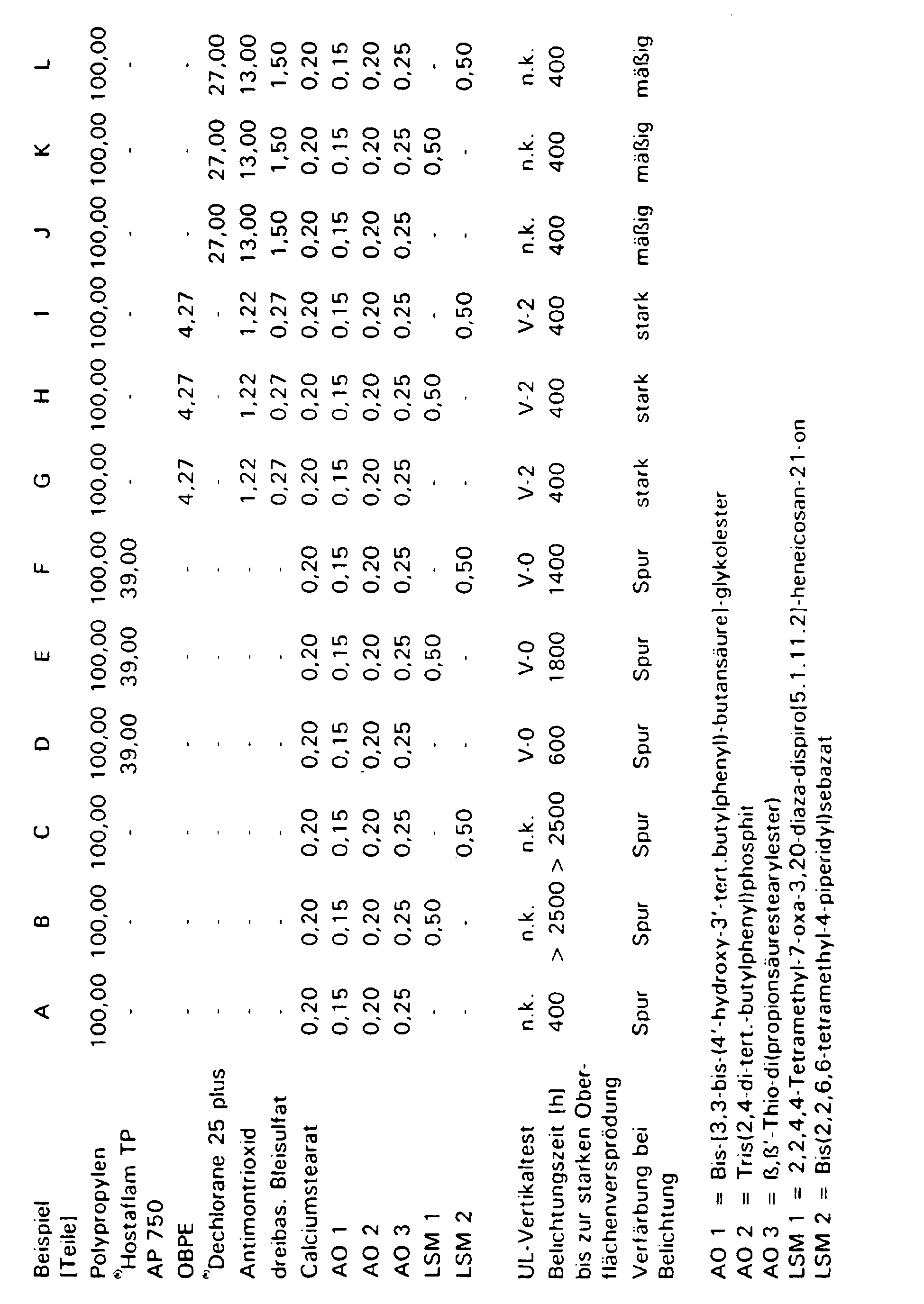

## Patentansprüche

1. Flammwidrige Kunststoff-Formmasse mit verbesserter Lichtstabilität, enthaltend
50 bis 80 Gew.-% eines Polymeren oder einer Polymermischung,
15 bis 50 Gew.-% eines oder mehrerer Flammschutzmittel auf Basis Ammoniumpolyphosphat,
bis zu 2,0 Gew.-% eines oder mehrerer UV-Absorber bzw.
Lichtschutzmittel, bezogen auf den Polymeranteil der Gesamtmischung sowie gegebenenfalls
bis zu 80 Gew.-% Füllstoffe und Verstärkungsmittel, und/oder
bis zu 10 Gew.-% weiterer Additive.

2. Formmasse nach Anspruch 1, **dadurch gekennzeichnet, daß** das Polymer ein Polyolefin, insbesondere Polyethylen, Polypropylen oder ein Ethylen-Vinylacetat-Copolymer ist.

3. Formmasse nach Anspruch 1 oder 2, **dadurch gekennzeichnet, daß** darin 20 bis 40 Gew.-% eines Flammschutzmittels auf Basis Ammonlumpolyphosphat enthalten sind.

4. Formmasse nach mindestens einem der Ansprüche 1 bis 3, **dadurch gekennzeichnet, daß** darin 0,3 bis 1,5 Gew.-% UV-Absorber bzw. Lichtschutzmittel, bezogen auf den Polymeranteil der Gesamtmischung, enthalten sind.

5. Formmasse nach mindestens einem der Ansprüche 1 bis 4, **dadurch gekennzeichnet, daß** die UV-Absorber bzw. Lichtschutzmittel zur Klasse der sterisch gehinderten Amine und der 2-Hydroxybenzophenone gehören.

6. Formmasse nach mindestens einem der Ansprüche 1 bis 5, **dadurch gekennzeichnet, daß** darin 10 bis 50 Gew.-% Füllstoffe und Verstärkungsmittel enthalten sind.

7. Formmasse nach mindestens einem der Ansprüche 1 bis 6, **dadurch gekennzeichnet, daß** darin 0,01 bis 5 Gew.-% weitere Additive enthalten sind.

8. Verfahren zur Herstellung einer flammwidrigen Kunststoff-Formmasse mit verbesserter Lichtstabilität, enthaltend
a) 50 bis 80 Gew.-% eines Polymeren oder einer Polymermischung
b) 15 bis 50 Gew.-% eines oder mehrerer Flammschutzmittel auf Basis Ammoniumpolyphosphat,
c) bis zu 2,0 Gew.-%, bezogen auf den Polymeranteil der Gesamtmischung, eines oder mehrerer UV-Absorber bzw. Lichtschutzmittel,
sowie gegebenenfalls
d) bis zu 80 Gew.-% Füllstoffe und Versiärkungsrnittel, und/oder
e) bis zu 10 Gew.-% weiterer Additive,
**dadurch gekennzeichnet, daß** die Bestandteile b bis e in das Polymere unmittelbar nach der Polymerisation oder in die Polymerschmelze vor oder während der Formgebung eingearbeitet werden.

9. Verfahren nach Anspruch 8, **dadurch gekennzeichnet, daß** die Zugabe der einzuarbeitenden Verbindungen in Form eines Masterbatches mit bis zu 75 Gew.-% erfolgt.

10. Verwendung der Formmasse gemäß Anspruch 1 zur Herstellung flammwidrig ausgerüsteter Formteile mit verbesserter Lichtstabilität.

## Claims

1. A flame-resistant plastics molding composition of improved stability to light, comprising
50 to 80% by weight of a polymer or a polymer mixture,
15 to 50% by weight of one or more flameproofing agents based on ammonium polyphosphate,
up to 2.0% by weight of one or more UV absorbers or light stabilizers, based on the polymer content of the total mixture, and, if appropriate,
up to 80% by weight of fillers and reinforcing agents, and/or
up to 10% by weight of further additives.

2. A molding composition as claimed in claim 1, in which the polymer is a polyolefin, in particular polyethylene, polypropylene or an ethylene/vinyl acetate copolymer.

3. A molding composition as claimed in claim 1 or 2, which comprises 20 to 40% by weight of a flameproofing agent based on ammonium polyphosphate.

4. A molding composition as claimed in at least one of claims 1 to 3, which comprises 0.3 to 1.5% by weight of UV absorber or light stabilizer, based on the polymer content of the total mixture.

5. A molding composition as claimed in at least one of claims 1 to 4, in which the UV absorber or light stabilizer belongs to the class of sterically hindered amines or 2-hydroxybenzophenones.

6. A molding composition as claimed in at least one of claims 1 to 5, which comprises 10 to 50% by weight of fillers and reinforcing agents.

7. A molding composition as claimed in at least one of claims 1 to 6, which comprises 0.01 to 5% by weight of further additives.

8. A process for the preparation of a flame-resistant plastics molding composition of improved stability to light, comprising
a) 50 to 80% by weight of a polymer or a polymer mixture,
b) 15 to 50% by weight of one or more flameproofing agents based on ammonium polyphosphate,
c) up to 2.0% by weight, based on the polymer content of the total mixture, of one or more UV absorbers or light stabilizers,
and, if appropriate,
d) up to 80% by weight of fillers and reinforcing agents and/or
e) up to 10% by weight of further additives, which comprises incorporating constituents b to e into the polymer immediately after the polymerization or into the polymer melt before or during shaping.

9. The process as claimed in claim 8, wherein the compounds to be incorporated are added in the form of a masterbatch with a content of up to 75% by weight.

10. The use of a molding composition as claimed in claim 1 for the production of moldings of improved stability to light which have been provided with a flame-resistant treatment.

## Revendications

1. Mélange à mouler de matière plastique ignifuge, ayant une stabilité améliorée à la lumière, contenant
50 à 80 % en poids d'un polymère ou d'un mélange de polymères,
15 à 50 % en poids d'un ou plusieurs agents d'ignifugation à base de polyphosphate d'ammonium,
jusqu'à 2,0 % en poids d'un ou plusieurs agents absorbant les UV ou agents de protection contre la lumière, par rapport à la partie polymère du mélange total, et éventuellement
jusqu'à 80 % en poids de matières de charge et de renforts et/ou
jusqu'à 10 % en poids d'autres additifs.

2. Mélange à mouler selon la revendication 1, **caractérisé en ce que** le polymère est une polyoléfine, en particulier le polyéthylène, le polypropylène ou un copolymère éthylène-acétate de vinyle.

3. Mélange à mouler selon la revendication 1 ou 2, **caractérisé en ce qu'**il contient 20 à 40 % en poids d'un agent d'ignifugation à base de polyphosphate d'ammonium.

4. Mélange à mouler selon au moins l'une des revendications 1 à 3, **caractérisé en ce qu'**il contient 0,3 à 1,5 % en poids d'un agent absorbant les UV ou d'un agent de protection contre la lumière, par rapport à la partie polymère du mélange total.

5. Mélange à mouler selon au moins l'uné des revendications 1 à 4, **caractérisé en ce que** les agents absorbant les rayons UV ou les agents de protection contre la lumière appartiennent à la classe des amines à empêchement stérique et des 2-hydroxybenzophénones.

6. Mélange à mouler selon au moins l'une des revendications 1 à 5, **caractérisé en ce qu'**il contient 10 à 50 % en poids de matières dé charge et de renforts.

7. Mélange à mouler selon au moins l'une des revendications 1 à 6, **caractérisé en ce qu'**il contient 0,01 à 5 % en poids d'autres additifs.

8. Procédé de préparation d'un mélange à mouler de matière plastique ignifuge présentant une stabilité améliorée à la lumière, contenant
a) 50 à 80 % en poids d'un polymère ou d'un mélange de polymères,
b) 15 à 50 % en poids d'un ou plusieurs agents d'ignifugation à base de polyphosphate d'ammonium,
c) jusqu'à 2,0 % en poids d'un ou plusieurs agents absorbant les UV ou agents de protection contre la lumière, par rapport à la partie polymère du mélange total, et éventuellement
d) jusqu'à 80 % en poids de matières de charge et de renforts et/ou
e) jusqu'à 10 % en poids d'autres additifs
**caractérisé en ce que** les constituants b) à e) sont incorporés dans le polymère immédiatement après la polymérisation, ou dans la masse fondue de polymère avant ou pendant le moulage.

9. Procédé selon la revendication 8, **caractérisé en ce que** l'addition des composés devant être incorporés est effectuée sous forme d'un mélange maître, à raison d'une proportion allant jusqu'à 75 % en poids.

10. Utilisation du mélange à mouler selon la revendication 1 pour fabriquer des pièces moulées ignifugées présentant une stabilité améliorée à la lumière.
